# EUROPEAN PATENT SPECIFICATION

(11) **EP 3 928 341 B1**
(45) Date of publication and mention of the grant of the patent: **01.04.2026**
(21) Application number: 20704333.2
(22) Date of filing: 18.02.2020
(51) Int. Cl.: H01H 3/36, H02B 13/075

(54) **A SWITCH FOR A MEDIUM VOLTAGE OR HIGH VOLTAGE SWITCHGEAR**
SCHALTER FÜR EINE MITTEL- ODER HOCHSPANNUNGSSCHALTANLAGE
COMMUTATEUR POUR UN APPAREILLAGE DE COMMUTATION MOYENNE OU HAUTE TENSION

(30) Priority: 18.02.2019 EP 19157848
(43) Date of publication of application: 29.12.2021
(73) Proprietor: ABB SCHWEIZ AG, 5400 Baden (CH)
(72) Inventor: ZITZMANN, Robby, 40822 Mettmann (DE); KOPP, Dalibor, 613 00 Brno (CZ)
(74) Representative: Maiwald GmbH
(86) International application number: PCT/EP2020/054209
(87) International publication number: WO 2020/169584

(56) References cited:
- EP-A2- 1 361 633
- WO-A1-2005/062325
- WO-A1-2013/102285
- US-A1- 2002 104 827

## Description

### FIELD OF THE INVENTION

The present invention relates to a switch that has utility as a three position switch in an air-insulated or gas-insulated switchgear for medium voltage or high voltage applications.

### BACKGROUND OF THE INVENTION

Contact systems for two or three position disconnectors for switchgear are actuated by different techniques, comprising for example levers, spindles, push rods, in order to move the switch into each of its end positions. The task is to move the switch to a particular position and keep it in its position, whilst under load by nominal current and also during a situation when short circuit current flows. However, lever based actuation usual creates discontinuous transmission, whilst spindle based activation does not exhibit discontinuities to the same extent, but is valid for only several rotations, and the thread required to be produced on the bolt and nut needs a high accuracy and is therefore costly. Furthermore, push rod based actuation requires significant space for the actuation movement.

EP1361633A2 describes a gas insulated switchgear capable of reducing the size and quantity of the component pans thereof and also reducing the size of the entire body thereof by effectively utilizing a space inside a container, comprising a bus conductor stored in a container earthed and sealed with insulating gas, two fixed collectors installed in the same direction as the bus conductor, a contact member disposed so as to be opposed to the collectors, and a movable contact conductor slidably inserted into the contact member and switching on and off the fixed collectors and the contact member, characterized in that a three-way disconnect and connect switch can be formed by forming one fixed collector in a disconnect part and the other fixed collector in an earthed stale so as to form an earthed switch.

US2002/104827A1 describes a gas insulated switchgear capable of performing maintenance and inspection of a breaker without shutting down a bus line, which comprises a first metallic case containing a breaker and having a bushing for leading a load; and a second metallic case containing a plurality of disconnectors and having a plurality of bushings for leading a bus line to be connected to the disconnectors, wherein the first metallic case and the second metallic case are connected to each other through a gas partition spacer.

WO2013/102285A1 describes that a rigid power transmission device comprises a chain holding rack, a chain wheel, chains, a three-position switch movable contact and a housing. The chain holding rack is U-shaped. The chains are arranged on the chain holding rack. The chain wheel and the chains are arranged in a matched manner. When the chain wheel rotates, the chains move along the chain holding rack. The three-position switch movable contact is arranged in the housing through conductive springs. The lower end of the three-position switch movable contact is connected with one end of the chain wheel. The upper end of the three-position switch movable contact is connected with an isolating switch movable contact. The isolating switch movable contact, the three-position switch movable contact, and the chains connected with the lower end of the three-position switch movable contact are arranged on the same vertical line. The rigid power transmission device drives the chain to perform vertical linear motion through rotation of the chain wheel to control the isolation switch movable contact to move vertically so as to control the switching-on and switching-off of a vacuum breaker, enables the vacuum breaker to be compact in structure, small in parts, low in cost, simple in structure and practical.

WO 2005/062325 A1 describes a disconnector comprising a movable conductor for connecting/disconnecting/earthing an electric line, an insulating holder for securing an input terminal part, a connecting terminal part and an earthing terminal part, an insulating rod for driving the movable conductor, and an operating mechanism performing positional control of the movable conductor through the insulating rod. The operating mechanism operates the movable conductor to perform linear motion for touching the input terminal part and the connecting terminal part to each other through the movable conductor thus bringing the electric line into connected state. The electric line is brought into earthed state when the input terminal part and the earthing terminal part are touched through the movable conductor and brought into disconnected state when the movable conductor touches the input terminal part.

### SUMMARY OF THE INVENTION

Therefore, it would be advantageous to have an improved three position switch for a medium voltage or high voltage switchgear.

The object of the present invention is solved with the subject matter of independent claim 1, wherein further embodiments are incorporated in the dependent claims.

In this way, an actuation element is provided that utilizes a flexible link to enable continuous transmission for the switching from one state to another state (on-off and off-earthed and vice versa, respectively, is provided), and where less space is required because the flexible link can be coiled or collapsed as it is pulled.

According to the invention, the switch comprises a fixed earth contact. In an earthing state of the switch the moveable contact is configured to be in a position that connects the second fixed contact to the earthing fixed contact. Activation of the contact drive in a third mode is configured to move the moveable contact to the position such that the switch is in the earthing state.

Thus, a three position switch for medium and high voltage switchgear is enabled.

In a further embodiment, the switch comprises a link guide. At least part of the at least one flexible link is configured to run within or adjacent to the link guide in a longitudinal direction. The link guide is configured to inhibit the at least one flexible link from flexing in a direction perpendicular to the longitudinal direction.

In this way, the link guide in stopping the flexible link from deforming it at least one direction, enables high axial forces to be applied during pushing actuation as well as pulling actuation.

According to the invention, the contact drive comprises at least one cog wheel configured to engage with the at least one flexible link.

In this manner, a simple mechanism if provided for pulling and pushing the flexible link through rotation of a cog wheel, that for example has teeth to engage with a flexible link in the form of a chain or notches or ridges to engage with a flexible link in the form of a toothed belt.

According to the invention, rotation of a cog wheel of the at least one cog wheel in a first direction is configured to pull a flexible link, and rotation of the cog wheel in a direction counter to the first direction is configured to push the flexible link.

In a further embodiment, the at least one flexible link is two flexible links.

In this manner, a flexible link guide may not be required, because the flexible links can be configured to resist bending when being pushed as well as when being pulled.

In a further embodiment, the at least one cog wheel is two cog wheels.

In a further embodiment, rotation of a first cog wheel of the two cog wheels in a first direction is configured to pull a first flexible link of the two flexible links and rotation of a second cog wheel of the two cog wheels in a second direction counter to the first direction is configured to pull a second flexible link of the two flexible links. Also, rotation of the first cog wheel of the two cog wheels in the second direction is configured to push the first flexible link of the two flexible links and rotation of the second cog wheel of the two cog wheels in the first direction is configured to push the second flexible link of the two flexible links.

In other words, the two flexible links are provided back to back. Thus, flexible links in the form of push chains that resist bending in one direction but can be bent in the other direction can be placed back to back such that they resist bending outwards away from each other. Then, during pushing they form a single flexible link that resists bending and that can apply high axial forces, and similarly can apply high axial forces when pulled and that can still be collapsed or coiled into two sets of collapsed or coiled flexible links.

According to the invention, the at least one flexible link comprises at least one chain.

According to the invention, the at least one chain comprises a push chain.

According to the invention, the push chain, when extended in a longitudinal axis, is configured to enable the chain to bend out of the axis in a first direction perpendicular to the axis and configured to resist the chain being bent out of the axis in a second direction opposite to the first direction.

According to the invention, the switch is configured to transition between the second mode and the third mode without entering the first mode.

Thus, the switch can move from an off state to an earthing state, and vice versa, without entering the on state.

In a further embodiment, the at least one cog wheel is configured to rotate through less that one revolution when the switch transitions between the second mode and the third mode. In this manner, a two or three position switch is provided where actuation is facilitated by less than one rotation of a cog wheel.

In a further embodiment, the contact drive is configured to pull the at least one flexible link to transition from the second mode to the third mode.

In a further embodiment, the contact drive is configured to push the at least one flexible link to transition from the third mode to the second mode.

In a further embodiment, the switch is configured to transition between the second mode and the first mode without entering the third mode.

Thus, the switch can move from an off state to an on state, and vice versa, without entering the earthing state.

In a further embodiment, the at least one cog wheel is configured to rotate through less that one revolution when the switch transitions between the second mode and the first mode.

In this manner, a two or three position switch is provided where actuation is facilitated by less than one rotation of a cog wheel.

In a further embodiment, the contact drive is configured to push the at least one flexible link to transition from the second mode to the first mode.

In a further embodiment, the contact drive is configured to pull the at least one flexible link to transition from the first mode to the second mode.

In a further embodiment, the switch comprises a compartment configured to accommodate a length of the at least one flexible link when the contact drive pulls the at least one flexible link. A maximum internal dimension of the compartment is less than the length of the at least one flexible link.

In this manner, space is saved as the flexible link can be coiled or collapsed as required.

In a further embodiment, there is provided a medium voltage or high voltage switchgear, comprising at least one switch according to the invention.

The invention and further embodiments will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows an example of a switch;
Fig. 2 shows an example of a switch;
Fig. 3 shows an example of a switch;
Fig. 4 shows a part of an example of a switch;
Fig. 5 shows a part of an example of a switch; and
Fig. 6 shows a compartment of a medium voltage or high voltage switchgear with three examples of a switch.

### DETAILED DESCRIPTION OF EMBODIMENTS

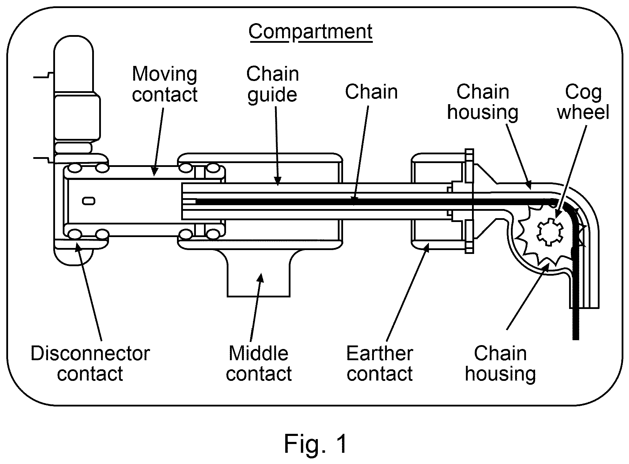

Figs. 1-6 relate to a switch for a medium voltage or high voltage switchgear. The switch comprises a first fixed contact, a second fixed contact, a moveable contact, at least one flexible link, and a contact drive. In an on state of the switch the moveable contact is in a position that connects the first fixed contact to the second fixed contact. In an off state of the switch the moveable contact is in a position where the first fixed contact is not connected to the second fixed contact. The at least one flexible link is connected to the moveable contact. The at least one flexible link engages with the contact drive. The contact drive is configured to pull the moveable contact via the at least one flexible link. The contact drive is configured also to push the moveable contact via the at least one flexible link. Activation of the contact drive in a first mode is configured to move the moveable contact to the position such that the switch is in the on state. Activation of the contact drive in a second mode is drive is configured to move the moveable contact to the position such that the switch is in the off state.

In an example, the on state relates to current being able to flow from the first fixed contact to the second fixed contact via the moveable contact.

In an example, in the off state the moveable contact is configured to be located substantially within the second fixed contact.

In an example, the first fixed contact is a disconnector contact.

In an example, the second fixed contact is a middle contact.

The switch comprises a fixed earth contact. In an earthing state of the switch the moveable contact is configured to be in a position that connects the second fixed contact to the earthing fixed contact. Activation of the contact drive in a third mode is configured to move the moveable contact to the position such that the switch is in the earthing state.

According to an example, the switch comprises a link guide. At least part of the at least one flexible link is configured to run within or adjacent to the link guide in a longitudinal direction. The link guide is configured to inhibit or resist the at least one flexible link from flexing in a direction perpendicular to the longitudinal direction.

In an example, the link guide is located on only one side of the flexible link.

In an example, the link guide is located on at least opposing sides of the flexible link.

The contact drive comprises at least one cog wheel configured to engage with the at least one flexible link.

Rotation of the cog wheel of the at least one cog wheel in a first direction is configured to pull a flexible link. Then rotation of the cog wheel in a direction counter to the first direction is configured to push the flexible link.

According to an example, the at least one flexible link is two flexible links.

According to an example, the at least one cog wheel is two cog wheels.

According to an example, rotation of a first cog wheel of the two cog wheels in a first direction is configured to pull a first flexible link of the two flexible links and rotation of a second cog wheel of the two cog wheels in a second direction counter to the first direction is configured to pull a second flexible link of the two flexible links. Then rotation of the first cog wheel of the two cog wheels in the second direction is configured to push the first flexible link of the two flexible links and rotation of the second cog wheel of the two cog wheels in the first direction is configured to push the second flexible link of the two flexible links.

The at least one flexible link comprises at least one chain.

The at least one chain comprises a push chain.

The push chain, when extended in a longitudinal axis is configured to enable the chain to bend out of the axis in a first direction perpendicular to the axis and configured to resist the chain being bent out of the axis in a second direction opposite to the first direction.

The switch is configured to transition between the second mode and the third mode without entering the first mode.

According to an example, the at least one cog wheel is configured to rotate through less that one revolution when the switch transitions between the second mode and the third mode.

According to an example, the contact drive is configured to pull the at least one flexible link to transition from the second mode to the third mode.

According to an example, the contact drive is configured to push the at least one flexible link to transition from the third mode to the second mode.

According to an example, the switch is configured to transition between the second mode and the first mode without entering the third mode.

According to an example, the at least one cog wheel is configured to rotate through less that one revolution when the switch transitions between the second mode and the first mode.

In an example, the at least one cog wheel is configured to rotate through less that one revolution when the switch transitions between the first mode and the third mode. Thus, the switch can move from an on state through an off state to an earthing state via less than one rotation of an actuating cog wheel.

According to an example, the contact drive is configured to push the at least one flexible link to transition from the second mode to the first mode.

According to an example, the contact drive is configured to pull the at least one flexible link to transition from the first mode to the second mode.

According to an example, the switch comprises a compartment configured to accommodate a length of the at least one flexible link when the contact drive pulls the at least one flexible link. A maximum internal dimension of the compartment is less than the length of the at least one flexible link that resides in the compartment.

Thus, the switch as described in any example above finds utility in a medium voltage or high voltage switchgear.

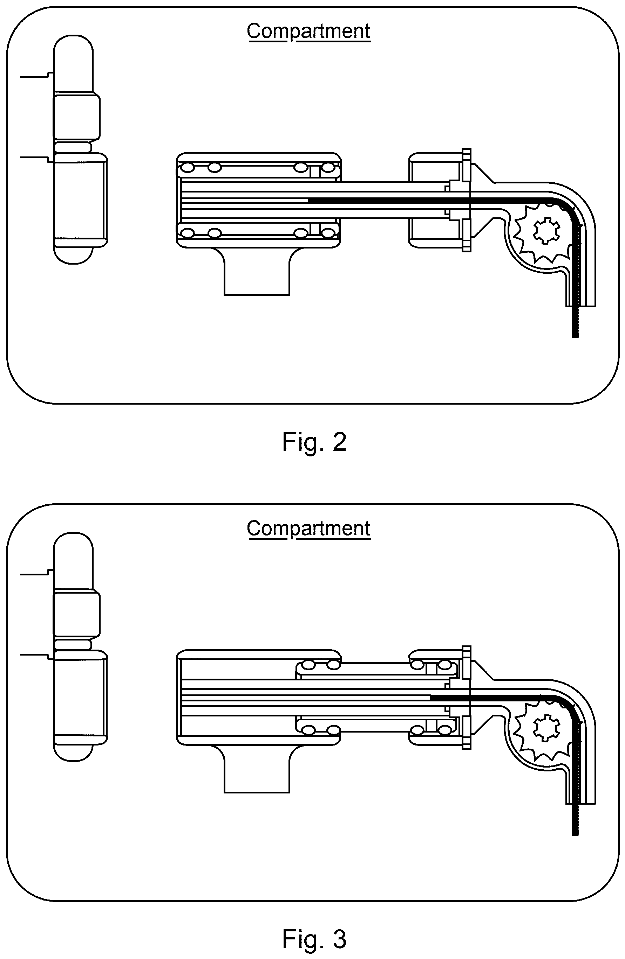

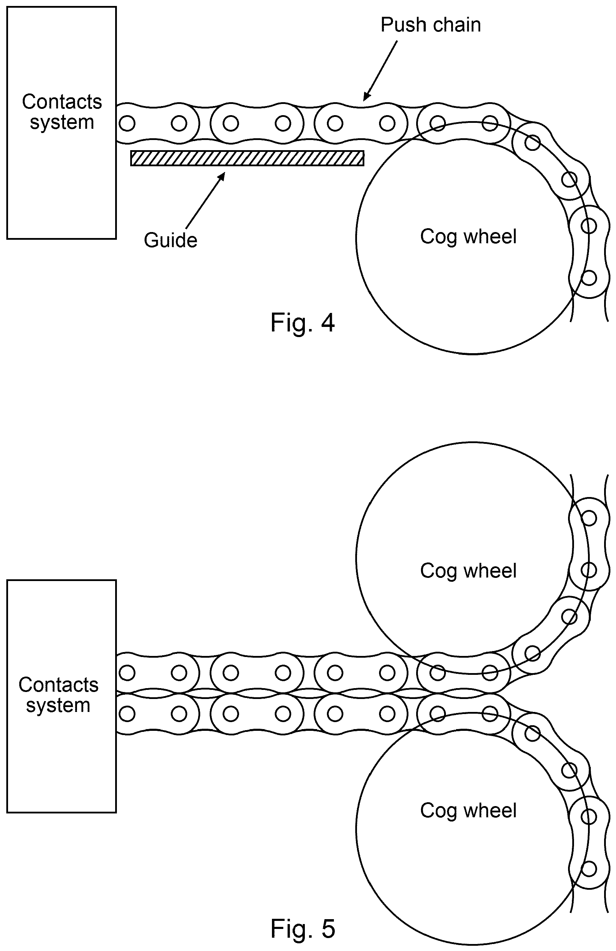

Thus, relating to the figures a specific detailed embodiment is now described. A push chain of the switch is attached or connected to a moving or movable contact. The push chain engages with a cog wheel, and is partially wrapped around the cog wheel, where teeth of the cog wheel protrude into and through the chain. Thus, rotation of the cog wheel pulls or pushes the push chain is required. Here, a push chain is a chain that is bending resistant at one side and limp at the opposite side. The switch also has a disconnector contact at one end, a middle contact in the centre, and an earthing contact at the end closest to the cog wheel. The cog wheel forms part of a contact drive, having a motor and control electronics that are not shown. A chain guide is provided, shown in more detail in Fig. 4. As discussed above, push chain can flex in one direction but resists flexing in the other direction, and the chain guide is provided on the side that the push chain can flex. Thus, with a chain guide is provided the push chain cannot then flex. In this manner, with the usage of the guide the push chain can transfer high forces in an longitudinal direction, via a push and pull system that is actuated by a chain wheel or cog wheel. As shown in Fig. 1, the cog wheel has rotated in an anticlockwise direction and the push chain has pushed the movable contact to the left until it connects the disconnector contact with the middle contact, and the disconnector is then in an on position. Then, as shown in Fig. 2 rotation of the cog wheel in a clockwise direction has pulled the push chain leading to the movable contact being pulled to a position within the middle contact, resulting in a disconnector off and earth are off position. As shown in Fig. 3 further rotation of the cog wheel in a clockwise direction has pulled the push chain leading to the movable contact being pulled to a position such that the movable contact connects the middle contact to the earthed contact, resulting in an earther on position. Then, rotation of the cog wheel in an anticlockwise direction can push the movable contact from the Earth on position to the disconnector off and earth of position, with further rotation in the anticlockwise direction leading to the movable contact being pushed to the disconnector on position.

Behind the chain wheel or cog wheel, the chain can collapse in a provided room and does not need more space. An advantage is to have an actuation element which can actuate a contact system by less than one rotation together, with the advantage that a continuous transmission is provided with less demand for space. A further advantage is that the drive is independent of the position of the contact system in relation to the orientation (horizontal, vertical, diagonal). Also, the connection of the push chain to the movable contact is relatively simple. Also, by using a push chain activation can be facilitated through only one mechanic bush, lead to less parts and to less risk of leakage during actuation.

Furthermore, Instead of using one push chain, two chain can be used. This is shown in Fig. 5, where to push chains are used back-to-back, where they can only flex towards each other and therefore as a pair cannot then flex when located back-to-back, but can still flex behind the cog wheel and be stored in space-saving manner. However, the two chains acting in this manner can still pull the movable contact and pushed the movable contact with high force, and in this case a chain guide is not required, although clearly could still be utilised.

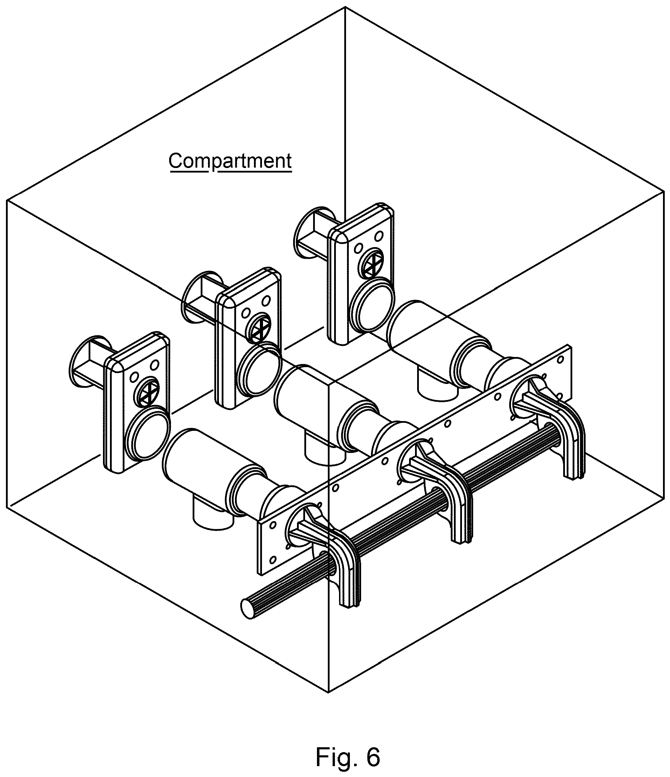

Fig. 6 shows an example of three switches in a compartment of a medium voltage or high voltage switchgear, with the three switches shown in the earthing on state.

While the invention has been illustrated and described in detail in the drawings and foregoing description, such illustration and description are to be considered illustrative or exemplary and not restrictive. The invention is not limited to the disclosed embodiments, but is solely defined by the appended claims.

## Claims

1. A switch for a medium voltage or high voltage switchgear, the switch comprising:
- a first fixed contact;
- a second fixed contact;
- a moveable contact;
- a fixed earth contact;
- at least one flexible link; and
- a contact drive;
wherein, in an on state of the switch the moveable contact is in a position that connects the first fixed contact to the second fixed contact;
wherein, in an off state of the switch the moveable contact is in a position where the first fixed contact is not connected to the second fixed contact;
wherein in an earthing state of the switch the moveable contact is configured to be in a position that connects the second fixed contact to the earthing fixed contact;
wherein, the at least one flexible link is connected to the moveable contact;
wherein, the at least one flexible link engages with the contact drive, and wherein the contact drive is configured to pull the moveable contact via the at least one flexible link and the contact drive is configured to push the moveable contact via the at least one flexible link;
wherein the contact drive comprises at least one cog wheel configured to engage with the at least one flexible link, and wherein rotation of a cog wheel of the at least one cog wheel in a first direction is configured to pull a flexible link, and wherein rotation of the cog wheel in a direction counter to the first direction is configured to push the flexible link;
wherein the at least one flexible link comprises at least one chain, wherein the at least one chain comprises a push chain, wherein the push chain, when extended in a longitudinal axis is configured to enable the chain to bend out of the axis in a first direction perpendicular to the axis and configured to resist the chain being bent out of the axis in a second direction opposite to the first direction;
wherein, activation of the contact drive in a first mode is configured to move the moveable contact to the position such that the switch is in the on state, wherein a first part of the chain is at least partially wrapped around the cog wheel;
wherein, activation of the contact drive in a second mode is configured to move the moveable contact to the position such that the switch is in the off state, wherein a second part of the chain is at least partially wrapped around the cog wheel;
wherein activation of the contact drive in a third mode is configured to move the moveable contact to the position such that the switch is in the earthing state, wherein a third part of the chain is at least partially wrapped around the cog wheel; and
wherein the switch is configured to transition between the second mode and the third mode without entering the first mode.

2. Switch according to claim 1, wherein the switch comprises a link guide; wherein at least part of the at least one flexible link is configured to run within or adjacent to the link guide in a longitudinal direction; and wherein the link guide is configured to inhibit the at least one flexible link from flexing in a direction perpendicular to the longitudinal direction.

3. Switch according to any of claims 1-2, wherein the at least one flexible link is two flexible links.

4. Switch according to claim 3, wherein the at least one cog wheel is two cog wheels.

5. Switch according to claim 4, wherein rotation of a first cog wheel of the two cog wheels in a first direction is configured to pull a first flexible link of the two flexible links and rotation of a second cog wheel of the two cog wheels in a second direction counter to the first direction is configured to pull a second flexible link of the two flexible links, and rotation of the first cog wheel of the two cog wheels in the second direction is configured to push the first flexible link of the two flexible links and rotation of the second cog wheel of the two cog wheels in the first direction is configured to push the second flexible link of the two flexible links.

6. Switch according to any of claims 1-5, wherein the at least one cog wheel is configured to rotate through less that one revolution when the switch transitions between the second mode and the third mode.

7. Switch according to any of claims 1-6, wherein the contact drive is configured to pull the at least one flexible link to transition from the second mode to the third mode.

8. Switch according to any of claims 1-7, wherein the contact drive is configured to push the at least one flexible link to transition from the third mode to the second mode.

9. Switch according to any of claims 1-8, wherein the switch is configured to transition between the second mode and the first mode without entering the third mode.

10. Switch according to claim 9, wherein the at least one cog wheel is configured to rotate through less that one revolution when the switch transitions between the second mode and the first mode.

11. Switch according to any of claims 1-10, wherein the contact drive is configured to push the at least one flexible link to transition from the second mode to the first mode.

12. Switch according to any of claims 1-11, wherein the contact drive is configured to pull the at least one flexible link to transition from the first mode to the second mode.

13. Switch according to any of claims 1-12, wherein the switch comprises a compartment configured to accommodate a length of the at least one flexible link when the contact drive pulls the at least one flexible link, wherein a maximum internal dimension of the compartment is less than the length of the at least one flexible link.

14. A medium voltage or high voltage switchgear, comprising at least one switch according to any of claims 1-13.

## Patentansprüche

1. Ein Schalter für eine Mittelspannungs- oder Hochspannungsschaltanlage, wobei der Schalter umfasst:
- einen ersten festen Kontakt;
- einen zweiten festen Kontakt;
- ein beweglicher Kontakt;
- einem festen Erdungskontakt;
- mindestens ein flexibles Verbindungselement; und
- einen Kontaktantrieb;
wobei sich der bewegliche Kontakt im eingeschalteten Zustand des Schalters in einer Position befindet, die den ersten festen Kontakt mit dem zweiten festen Kontakt verbindet;
wobei sich der bewegliche Kontakt im ausgeschalteten Zustand des Schalters in einer Position befindet, in der der erste feste Kontakt nicht mit dem zweiten festen Kontakt verbunden ist;
wobei in einem Erdungszustand des Schalters der bewegliche Kontakt so konfiguriert ist, dass er sich in einer Position befindet, die den zweiten festen Kontakt mit dem festen Erdungskontakt verbindet;
wobei die mindestens eine flexible Verbindung mit dem beweglichen Kontakt verbunden ist;
wobei die mindestens eine flexible Verbindung mit dem Kontaktantrieb in Eingriff steht und wobei der Kontaktantrieb so konfiguriert ist, dass er den beweglichen Kontakt über die mindestens eine flexible Verbindung zieht, und wobei der Kontaktantrieb so konfiguriert ist, dass er den beweglichen Kontakt über die mindestens eine flexible Verbindung drückt;
wobei der Kontaktantrieb mindestens ein Zahnrad umfasst, das so konfiguriert ist, dass es mit dem mindestens einen flexiblen Verbindungselement in Eingriff steht, und wobei die Drehung eines Zahnrads des mindestens einen Zahnrads in einer ersten Richtung so konfiguriert ist, dass sie eine flexible Verbindung zieht, und wobei die Drehung des Zahnrads in einer Richtung entgegen der ersten Richtung so konfiguriert ist, dass sie das flexible Verbindungselement drückt;
wobei das mindestens eine flexible Verbindungselement mindestens eine Kette umfasst, wobei die mindestens eine Kette eine Schubkette umfasst, wobei die Schubkette, wenn sie in einer Längsachse verlängert ist, so konfiguriert ist, dass sie es der Kette ermöglicht, sich aus der Achse in einer ersten Richtung senkrecht zur en Achse zu biegen, und so konfiguriert ist, dass sie einem Ausbiegen der Kette aus der Achse in einer zweiten Richtung entgegengesetzt zur ersten Richtung widersteht;
wobei die Aktivierung des Kontaktantriebs in einem ersten Modus so konfiguriert ist, dass der bewegliche Kontakt in eine Position bewegt wird, in der sich der Schalter im eingeschalteten Zustand befindet, wobei ein erster Teil der Kette zumindest teilweise um das Zahnrad gewickelt ist;
wobei die Aktivierung des Kontaktantriebs in einem zweiten Modus so konfiguriert ist, dass der bewegliche Kontakt in eine Position bewegt wird, in der sich der Schalter im ausgeschalteten Zustand befindet, wobei ein zweiter Teil der Kette zumindest teilweise um das Zahnrad gewickelt ist;
wobei die Aktivierung des Kontaktantriebs in einem dritten Modus so konfiguriert ist, dass der bewegliche Kontakt in eine Position bewegt wird, in der sich der Schalter im Erdungszustand befindet, wobei ein dritter Teil der Kette zumindest teilweise um das Zahnrad gewickelt ist; und
wobei der Schalter so konfiguriert ist, dass er zwischen dem zweiten Modus und dem dritten Modus wechselt, ohne in den ersten Modus zu gelangen.

2. Schalter nach Anspruch 1, wobei der Schalter eine Verbindungsführung umfasst; wobei mindestens ein Teil des mindestens einen flexiblen Verbindungselements so konfiguriert ist, dass sie innerhalb oder neben der Verbindungsführung in Längsrichtung verläuft; und wobei die Verbindungsführung so konfiguriert ist, dass sie das mindestens eine flexible Verbindungselement daran hindert, sich in einer Richtung senkrecht zur Längsrichtung zu biegen.

3. Schalter nach einem der Ansprüche 1-2, wobei das mindestens eine flexible Verbindungselement zwei flexible Verbindungselemente sind.

4. Schalter gemäß Anspruch 3, wobei das mindestens eine Zahnrad zwei Zahnräder umfasst.

5. Schalter gemäß Anspruch 4, wobei die Drehung eines ersten Zahnrads der beiden Zahnräder in einer ersten Richtung so konfiguriert ist, dass sie ein erstes flexibles Verbindungselement der beiden flexiblen Verbindungselemente zieht, und die Drehung eines zweiten Zahnrads der beiden Zahnräder in einer zweiten Richtung, die der ersten Richtung entgegengesetzt ist, so konfiguriert ist, dass sie ein zweites flexibles Verbindungselement der beiden flexiblen Verbindungselemente zieht, und die Drehung des ersten Zahnrads der beiden Zahnräder in der zweiten Richtung so konfiguriert ist, dass sie das erste flexible Verbindungselement der beiden flexiblen Verbindungselemente drückt, und die Drehung des zweiten Zahnrads der beiden Zahnräder in der ersten Richtung so konfiguriert ist, dass sie das zweite flexible Verbindungselement der beiden flexiblen Verbindungselemente drückt.

6. Schalter gemäß einem der Ansprüche 1 bis 5, wobei das mindestens eine Zahnrad so konfiguriert ist, dass es sich um weniger als eine Umdrehung dreht, wenn der Schalter zwischen dem zweiten Modus und dem dritten Modus wechselt.

7. Schalter gemäß einem der Ansprüche 1 bis 6, wobei der Kontaktantrieb so konfiguriert ist, dass er das mindestens eine flexible Verbindungselement zieht, um vom zweiten Modus in den dritten Modus überzugehen.

8. Schalter gemäß einem der Ansprüche 1 bis 7, wobei der Kontaktantrieb so konfiguriert ist, dass er das mindestens eine flexible Verbindungselement drückt, um vom dritten Modus in den zweiten Modus überzugehen.

9. Schalter gemäß einem der Ansprüche 1 bis 8, wobei der Schalter so konfiguriert ist, dass er zwischen dem zweiten Modus und dem ersten Modus wechselt, ohne in den dritten Modus zu gelangen.

10. Schalter gemäß Anspruch 9, wobei das mindestens eine Zahnrad so konfiguriert ist, dass es sich um weniger als eine Umdrehung dreht, wenn der Schalter zwischen dem zweiten Modus und dem ersten Modus wechselt.

11. Schalter nach einem der Ansprüche 1 bis 10, wobei der Kontaktantrieb so konfiguriert ist, dass er das mindestens eine flexible Verbindungselement drückt, um vom zweiten Modus in den ersten Modus überzugehen.

12. Schalter nach einem der Ansprüche 1 bis 11, wobei der Kontaktantrieb so konfiguriert ist, dass er das mindestens eine flexible Verbindungselement zieht, um vom ersten Modus in den zweiten Modus überzugehen.

13. Schalter gemäß einem der Ansprüche 1 bis 12, wobei der Schalter ein Fach umfasst, das so konfiguriert ist, dass es eine Länge des mindestens einen flexiblen Verbindungselements aufnehmen kann, wenn der Kontaktantrieb das mindestens eine flexible Verbindungselement zieht, wobei eine maximale Innenabmessung des Fachs kleiner ist als die Länge des mindestens einen flexiblen Verbindungselements.

14. Mittelspannungs- oder Hochspannungsschaltanlage, die mindestens einen Schalter gemäß einem der Ansprüche 1 bis 13 umfasst.

## Revendications

1. Commutateur pour un appareillage de commutation moyenne tension ou haute tension, le commutateur comprenant :
- un premier contact fixe ;
- un deuxième contact fixe ;
- un contact mobile ;
- un contact à la terre fixe ;
- au moins une liaison souple ; et
- un entraînement de contact ;
dans lequel, dans un état allumé du commutateur le contact mobile est dans une position qui connecte le premier contact fixe au deuxième contact fixe ;
dans lequel, dans un état éteint du commutateur le contact mobile est dans une position où le premier contact fixe n'est pas connecté au deuxième contact fixe ;
dans lequel dans un état de mise à la terre du commutateur le contact mobile est conçu pour être dans une position qui connecte le deuxième contact fixe au contact fixe de mise à la terre ;
dans lequel, l'au moins une liaison souple est connectée au contact mobile ;
dans lequel, l'au moins une liaison souple vient en prise avec l'entraînement de contact, et l'entraînement de contact étant conçu pour tirer le contact mobile par l'intermédiaire de l'au moins une liaison souple et l'entraînement de contact étant conçu pour pousser le contact mobile par l'intermédiaire de l'au moins une liaison souple ;
dans lequel l'entraînement de contact comprend au moins une roue dentée conçue pour venir en prise avec l'au moins une liaison souple, et dans lequel la rotation d'une roue dentée de l'au moins une roue dentée dans une première direction est conçue pour tirer une liaison souple, et dans lequel la rotation de la roue dentée dans une direction contraire à la première direction est conçue pour pousser la liaison souple ;
dans lequel l'au moins une liaison souple comprend au moins une chaîne, l'au moins une chaîne comprenant une chaîne de poussée, la chaîne de poussée, lorsqu'elle est étendue dans un axe longitudinal étant conçue pour permettre à la chaîne de se plier hors de l'axe dans une première direction perpendiculaire à l'axe et conçue pour que la chaîne résiste à un pliage hors de l'axe dans une deuxième direction opposée à la première direction ; dans lequel, l'activation de l'entraînement de contact dans un premier mode est conçue pour déplacer le contact mobile vers la position de telle sorte que le commutateur est dans l'état allumé, dans lequel une première partie de la chaîne est au moins partiellement enroulée autour de la roue dentée ;
dans lequel, l'activation de l'entraînement de contact dans un deuxième mode est conçue pour déplacer le contact mobile vers la position de telle sorte que le commutateur est dans l'état éteint, dans lequel une deuxième partie de la chaîne est au moins partiellement enroulée autour de la roue dentée ;
dans lequel l'activation de l'entraînement de contact dans un troisième mode est conçue pour déplacer le contact mobile vers la position de telle sorte que le commutateur est dans l'état de mise à la terre, dans lequel une troisième partie de la chaîne est au moins partiellement enroulée autour de la roue dentée ; et
le commutateur étant conçu pour effectuer une transition entre le deuxième mode et le troisième mode sans entrer dans le premier mode.

2. Commutateur selon la revendication 1, le commutateur comprenant un guide de liaison ; dans lequel au moins une partie de l'au moins une liaison souple est conçue pour passer à l'intérieur du de manière adjacente au guide de liaison dans une direction longitudinale ; et le guide de liaison étant conçu pour empêcher l'au moins une liaison souple de fléchir dans une direction perpendiculaire à la direction longitudinale.

3. Commutateur selon l'une quelconque des revendications 1 à 2, dans lequel l'au moins une liaison souple est deux liaisons souples.

4. Commutateur selon la revendication 3, dans lequel l'au moins une roue dentée est deux roues dentées.

5. Commutateur selon la revendication 4, dans lequel la rotation d'une première roue dentée des deux roues dentées dans une première direction est conçue pour tirer une première liaison souple des deux liaisons souples et la rotation d'une deuxième roue dentée des deux roues dentées dans une deuxième direction contraire à la première direction est conçue pour tirer une deuxième liaison souple des deux liaisons souples, et la rotation de la première roue dentée des deux roues dentées dans la deuxième direction est conçue pour pousser la première liaison souple des deux liaisons souples et la rotation de la deuxième roue dentée des deux roues dentées dans la première direction est conçue pour pousser la deuxième liaison souple des deux liaisons souples.

6. Commutateur selon l'une quelconque des revendications 1 à 5, dans lequel l'au moins une roue dentée est conçue pour effectuer une rotation de moins d'une révolution lorsque le commutateur effectue une transition entre le deuxième mode et le troisième mode.

7. Commutateur selon l'une quelconque des revendications 1 à 6, dans lequel l'entraînement de contact est conçu pour pousser l'au moins une liaison souple afin d'effectuer une transition du deuxième mode au troisième mode.

8. Commutateur selon l'une quelconque des revendications 1 à 7, dans lequel l'entraînement de contact est conçu pour pousser l'au moins une liaison souple afin d'effectuer une transition du troisième mode au deuxième mode.

9. Commutateur selon l'une quelconque des revendications 1 à 8, le commutateur étant conçu pour effectuer une transition entre le deuxième mode et le premier mode sans entrer dans le troisième mode.

10. Commutateur selon la revendication 9, dans lequel l'au moins une roue dentée est conçue pour effectuer une rotation de moins d'une révolution lorsque le commutateur effectue une transition entre le deuxième mode et le premier mode.

11. Commutateur selon l'une quelconque des revendications 1 à 10, dans lequel l'entraînement de contact est conçu pour pousser l'au moins une liaison souple afin d'effectuer une transition du deuxième mode au premier mode.

12. Commutateur selon l'une quelconque des revendications 1 à 11, dans lequel l'entraînement de contact est conçu pour tirer l'au moins une liaison souple afin d'effectuer une transition du premier mode au deuxième mode.

13. Commutateur selon l'une quelconque des revendications 1 à 12, le commutateur comprenant un compartiment conçu pour accueillir une longueur de l'au moins une liaison souple lorsque l'entraînement de contact tire l'au moins une liaison souple, dans lequel une dimension interne maximale du compartiment est inférieure à la longueur de l'au moins une liaison souple.

14. Appareillage de commutation moyenne tension ou haute tension, comprenant au moins un commutateur selon l'une quelconque des revendications 1 à 13.
